# EUROPÄISCHE PATENTANMELDUNG

(11) **EP 1 821 017 A2**
(43) Veröffentlichungstag der Anmeldung: **22.08.2007**
(21) Anmeldenummer: 07002784.2
(22) Anmeldetag: 09.02.2007
(51) Int. Cl.: F16K 31/524

(54) **Mehrwegeventil**

(30) Priorität: 15.02.2006 DE 102006006985
(71) Anmelder: Amazonen-Werke H. Dreyer GmbH & Co. KG, 49205 Hasbergen (DE)
(72) Erfinder: Austermann, Stefan, 48346 Ostbevern (DE); Sia, Tim-Randy, 49084 Osnabrück (DE); Langkamp, Laurenz, 49585 Tecklenburg (DE)

(57) **Zusammenfassung**

Mehrwegeventil, insbesondere für eine landwirtschaftliche Feldspritze mit einem Gehäuse, an dem eine als Druckleitung ausgebildete Zugangsleitung und mehrere Abgangsleitungen (24) angeschlossen sind. Um derartige Mehrwegeventile weiterzubilden, um gleichzeitig mehrere Abgangsleitungen (24) mit einer Zugangsleitung je nach Erfordernis verbinden zu können, ist vorgesehen dass den Abgangsleitungen (24) jeweils ein Ventilkörper (25) zum Öffnen und Schließen der Abgangsleitungen (24) zugeordnet ist, dass die Ventilkörper (25) mittels eines zentralen Betätigungselementes (27) in eine Schließ- und Öffnungsstellung versetzbar sind.

## Beschreibung

Die Erfindung betrifft ein Mehrwegeventil gemäß des Oberbegriffes des Patentanspruches 1.

Derartige Mehrwegeventile sind in der Praxis bekannt. Bei Feldspritzen sind diese Mehrwegeventile häufig als sog. Kugelhähne ausgebildet. So zeigt beispielsweise die DE 103 04 047 A1 eine Feldspritze, bei welcher ein zentrales Verteilerventil in der zentralen Druckleitung vorgesehen ist. Von diesem Verteilerventil führen Abzweigleitungen, denen wiederum Absperrventile zugeordnet sind, zu verschiedenen Einrichtungen der Feldspritze. Um eine bestimmte Funktion der Feldspritze, wie beispielsweise "spritzen", "spülen", "befüllen", etc. einstellen zu können, müssen sowohl das zentrale Verteilerventil wie das oder die jeweiligen in den von dem zentralen Verteilerventil abzweigenden Leitungen angeordneten Absperrventile in eine entsprechende Stellung gebracht werden.

Der Erfindung liegt die Aufgabe zugrunde, derartige Mehrwegeventile weiterzubilden, um eine Abgangsleitung oder gleichzeitig mehrere Abgangsleitungen mit einer Zugangsleitung je nach Erfordernis durch ein zentrales Ventil wahlweise miteinander durch ein zentrales Ventil wahlweise miteinander verbinden zu können.

Diese Aufgabe wird erfindungsgemäß durch die kennzeichnenden Merkmale des Patentanspruches 1 gelöst. Infolge dieser Maßnahme ergibt sich ein einfach aufgebautes Mehrwegeventil, welches sich durch wenige Funktionselemente mit einer einzigen Schaltwelle auszeichnet. Somit wird ein Mehrwegeventil mit möglichst vielen Abgangsleitungen und einer einfachen Betätigung und einer sicheren Abdichtung durch den Ventilkörper geschaffen. Je nach Einbau und Ausgestaltung des Betätigungselementes können je nach Bedarf ein oder mehrere Abgänge geöffnet und mit der Zugangsleitung verbunden werden, so dass sich verschiedene Funktionen einfach realisieren lassen.

Eine einfache Betätigung der Ventilkörper mittels des zentralen Betätigungselementes lässt sich in einfacher Weise dadurch realisieren, dass das zentrale Betätigungselement zumindest einen exzentrisch zur Drehachse des Betätigungselementes angeordneten Betätigungsnocken aufweist.

Um in einfacher Weise mehrere Abgangsleitungen mit der Zugangsleitung verbinden zu können, ist vorgesehen, dass das Betätigungselement zumindest zwei hintereinander und versetzt zueinander angeordnete Betätigungsnocken aufweist.

Um mittels des zentralen Betätigungselementes einerseits mit einer geringen Schaltkraft den Ventilkörper von seinem Sitz abheben zu können und andererseits über einen möglichst kleinen Drehwinkel oder Betätigungsweg des Betätigungselementes ein schnelles Öffnen des Ventils zu erreichen, ist vorgesehen dass der Betätigungsnocken in seinem Schaltbereich zur Betätigung des jeweiligen Ventilkörpers zumindest zwei unterschiedliche Steigungsbereiche aufweist und zwar zunächst zum Öffnen der Abgangsleitung eine relativ geringe Steigung und in seinem anschließenden Bereich eine wesentlich größere Steigung. Durch diese entsprechende Ausgestaltung des Betätigungsnockens wird ein sehr leichtes und schnelles Öffnen des Ventils gewährleistet.

Eine einfache Ausgestaltung des Ventilkörpers und dessen Anordnung im Gehäuse wird dadurch erreichen, dass der Ventilkörper an einem Hebel angeordnet ist, dass an der einen Seite des Hebels ein Lagerelement, mit welchem der Ventilkörper am Gehäuse verschwenkbar gelagert ist, angeordnet ist, dass die andere Seite des Hebels mit dem Betätigungselement zusammenwirkt.

Eine einfache kompakte Ausgestaltung des Ventils und die Anordnung der Ventilkörper lassen sich in vorteilhafter Weise dadurch realisieren, dass der dem Lagerelement zugeordnete Hebel und der mit dem Betätigungselement zusammenwirkende Hebel im Winkel zueinander, vorzugsweise zumindest annähernd senkrecht zueinander angeordnet sind.

Um verschiedene Kombinationsmöglichkeiten durch Öffnen oder Schließen der Ventilkörper zum Verbinden der verschiedenen Abgangsleitungen mit der Zugangsdruckleitung realisieren zu können, ist vorgesehen, dass Ventilkörper mit unterschiedlich langen Hebeln, die mit dem Betätigungselement zusammenwirken, vorgesehen sind.

Um verschiedene Kombinationsmöglichkeiten mit einem Ventil je nach Erfordernis realisieren zu können, ist vorgesehen, dass die Betätigungsnocken in unterschiedlichen Stellungen zueinander angeordnet und/oder anordbar sind. Eine vorteilhafte Einmündung der Zu- und Abgangsleitung in das Gehäuse des Mehrwegeventils lässt sich dadurch erreichen, dass die Öffnungen der Zuleitung und der Abgangsleitungen in einer Ebene und auf einem zentrisch zu der Drehachse des Betätigungselementes gelegenen Kreises angeordnet sind.

In vorteilhafter Weise sind hierbei die Zuleitungen und die Abgangsleitungen mit ihren Öffnungen in einer flachen Ebene in das Gehäuse einmündend angeordnet.

Um ein sicheres Schließen der Öffnungen der Abgangsleitungen durch die Ventilkörper zu gewährleisten, ist vorgesehen, dass den Ventilkörpern jeweils eine Feder derart zugeordnet ist, dass die Feder den Ventilkörper, bezogen auf die Öffnung der Abgangsleitung, in Schließstellung drückt.

In einer weiteren Ausführungsform ist vorgesehen, um das Betätigungselement sowohl mittels eines Handhebels wie auch mittels eines motorischen Hebelelementes in einfacher Weise betätigen zu können, ist vorgesehen, dass das Betätigungselement eine drehbar im Gehäuse gelagerte Betätigungswelle aufweist, dass die Betätigungswelle aus beiden Seiten des Gehäuses herausgeführt ist, dass dem einen Ende der Betätigungswelle ein Handbetätigungselement und dem anderen Ende der Betätigungswelle ein motorisches Betätigungselement zugeordnet ist.

Ein derartiges Mehrwegeventil wird in vorteilhafter Weise bei einer landwirtschaftlichen Feldspritze eingesetzt. Mithilfe eines derartigen Mehrwegeventils wird die Einstellung der Feldspritze für die jeweilige Betriebsart erheblich vereinfacht, weil mehrere Ventile üblicher Bauart in das erfindungsgemäße Mehrwegeventil vereinigt sind, somit werden Fehleinstellungen aufgrund der erfindungsgemäßen Ausgestaltung des Ventils ausgeschlossen.

Weitere Einzelheiten der Erfindung sind den übrigen Unteransprüchen, der Beispielsbeschreibung und den Zeichnungen zu entnehmen. Hierbei zeigen
- Fig. 1: den Flüssigkeitsplan einer Feldspritze in schematischer Darstellungsweise,

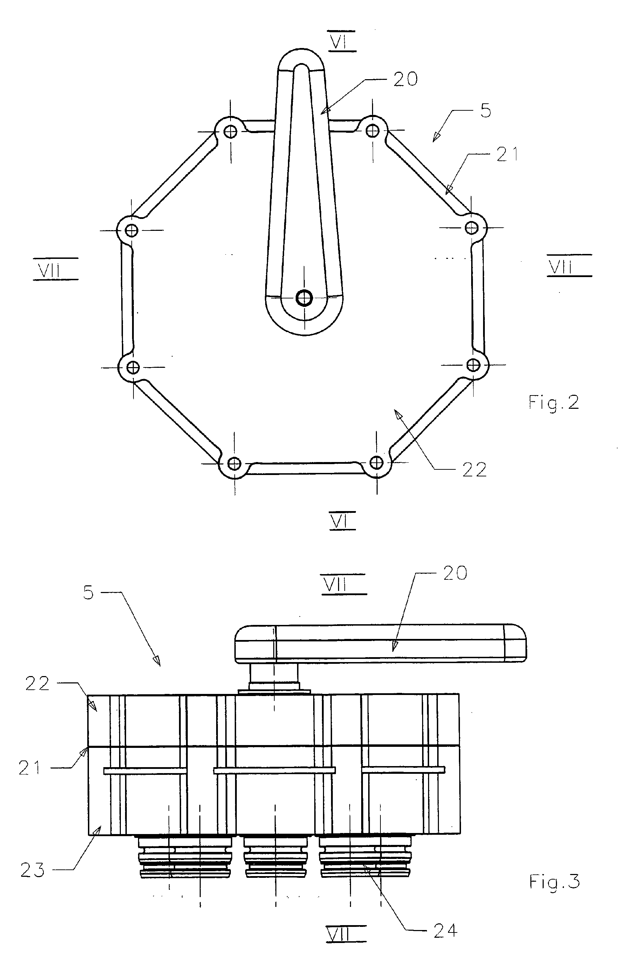

- Fig. 2: das Mehrwegeventil in der Draufsicht,
- Fig. 3: das Mehrwegeventil in der Vorderansicht,

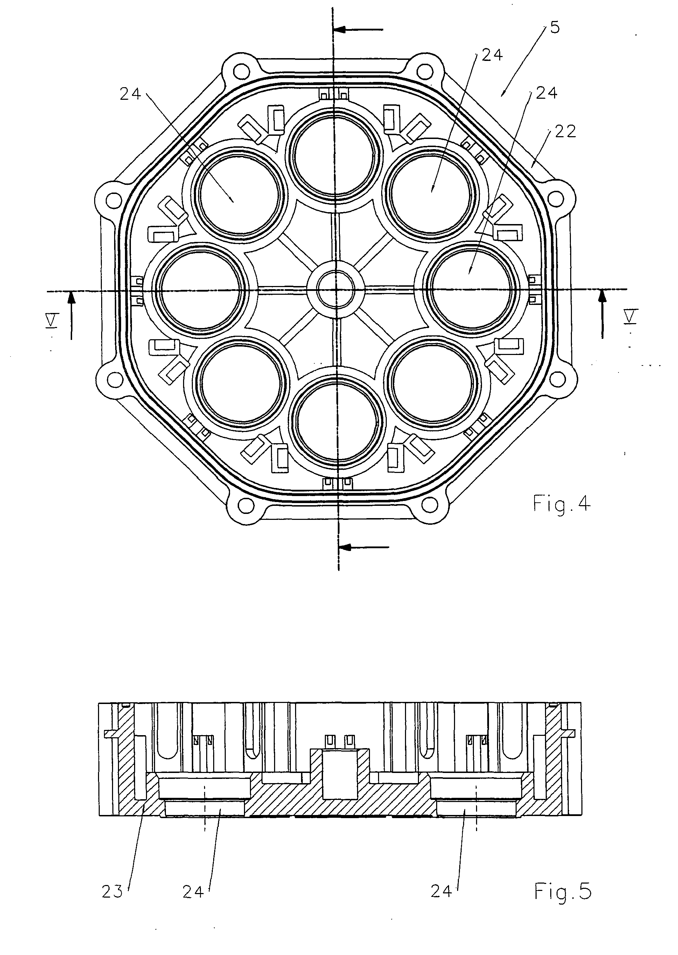

- Fig. 4: das Unterteil des Mehrwegeventil in der Draufsicht,
- Fig. 5: das Unterteil des Mehrwegeventils in der Ansicht V - V,
- Fig. 6: das Mehrwegeventil im Schnitt VI - VI,
- Fig. 7: das Mehrwegeventil im Schnitt VII - VII,
- Fig. 8: das Unterteil des Mehrwegeventils mit dem zentralen Betätigungselementes und den Ventilkörpern in perspektivischer Darstellung,
- Fig. 9: das Unterteil des Mehrwegeventils mit dem zentralen Betätigungselementes und den Ventilkörpern in perspektivischer Darstellung, wobei jedoch das zentrale Betätigungselement sich in einer anderen Position befindet und
- Fig. 10: das Unterteil des Mehrwegeventils mit dem zentralen Betätigungselementes und den Ventilkörpern in perspektivischer Darstellung, wobei jedoch das zentrale Betätigungselement sich in einer anderen Position befindet.

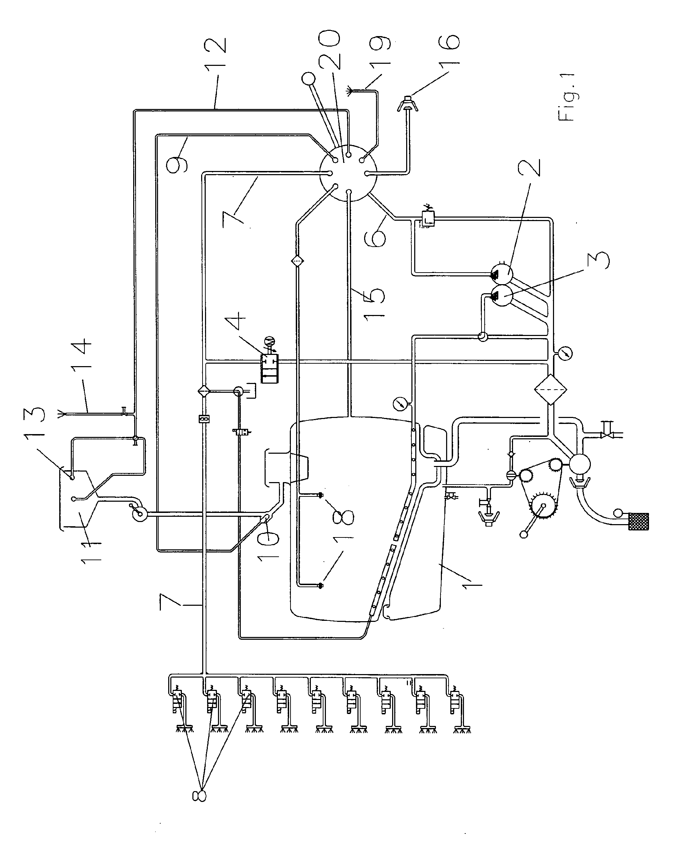

Die Feldspritze weist entsprechend des Funktionsschemas nach Fig. 1 unter anderem einen Flüssigkeitstank 1, die beiden motorisch angetriebenen Pumpen 2 und 3, ein Druckregelventil 4, welches motorisch einstellbar ist, die von der Pumpe 2 zum als Mehrwegeventil ausgebildeten Verteilerventil 5 führende und als Druckleitung ausgebildete Zugangsleitung 6 auf. Von dem Verteilventil 5 führen Abgangsleitungen zu verschiedenen Einrichtungen und Ausbringelementen der Feldspritze. Die Abzweigleitung 7 führt über das Druckregelventil 4 zu den einzelnen Teilbreitenleitungen 8 des Spritzgestänges. Die Teilleitung 9 führt von dem Mehrwegeventil 5 zu dem Einspülinjektor 10 des Einspülbehälters 11 und die weitere Leitung 12 zu der Einspüleinrichtung des Einspülbehälters 11, der Ringleitung 13 des Einspülbehälters 11 und zu dem Reinigungsleitung 14 des Einspülbehälters 11. Die Abzweigleitung 15 mündet zum Befüllen des Tanks 1 in diesen ein. Die weitere Füllleitung 16 ist für das Befüllen weiterer Behältnisse vorgesehen. Die Abzweigleitung 17 führt von dem Mehrwegeventil 5 zu der Innenreinigungsdüsen 18 des Flüssigkeitsbehälters 1. Weiterhin zweigt vom Mehrwegeventil die Außenreinigungsleitung 19 ab. Das Mehrwegeventil 5 weist den Handbetätigungshebel 20 auf.

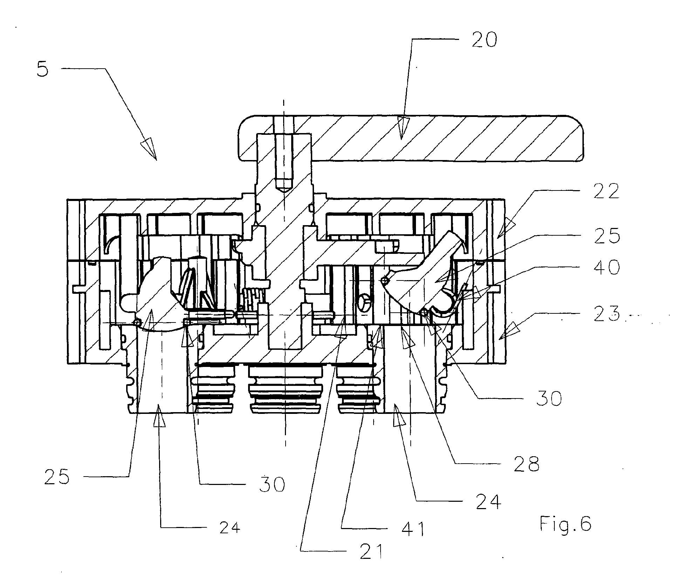

Das Mehrwegeventil 5 weist das Gehäuse 21, welches aus einem Ober- 22 und Unterteil 23 besteht, auf. In dem Unterteil 23 des Gehäuses 21 sind insgesamt acht Anschlüsse 24 einmündend angeordnet. Eine dieser Anschlüsse 24'ist an eine Druckleitung 6 angeschlossen, die die Zugangsleitung 6 zu dem Mehrwegehahn 5 bildet, während an den anderen Anschlüssen Abgangsleitungen angeschlossen sind. Falls weniger Anschlüsse 24 für die Feldspritze an das Mehrwegeventils 5 angeschlossen sind, können die nicht mit Abgangsleitungen versehenen Anschlüsse mit nicht dargestellten Verschlusselementen verschlossen werden. Den Anschlüssen 24, denen die Abgangsleitungen zugeordnet sind, sind Ventilkörper 25 zum Öffnen 21 und Schließen 5 der von dem Gehäuse des Mehrwegehahns abgehenden Abgangsleitungen zugeordnet. In dem Unterteil 23 und Oberteil 22 des Gehäuses 21 ist eine Schaltwelle 26 eines zentralen Betätigungselementes 27 drehbar gelagert. Die Öffnungen 28 der Zuleitung 24' und der Abgangsleitungen 24 sind in einer Ebene und auf einem zentrisch zu der Drehachse des Betätigungselementes 27 gelegenen Kreis angeordnet, wie die Figuren zeigen. Die den Öffnungen 28 der Abgangsleitungen zugeordneten Ventilkörper 25 weisen einen Ventilteller 29 mit einem als O-Ring 30 ausgebildeten Dichtelement und einen Hebel 31 auf. Der Ventilkörper 25 weist somit einen Hebel 31 auf. An der einen Seite 31 des Hebels 32 ist ein Lagerelement 33 angeordnet, mittels welcher der Ventilkörper 25 in dem Gehäuse 21 in entsprechend in dem Gehäuse 21 angeordneten Lagerelementen 34 verschwenkbar angeordnet ist. Die andere Seite 35 des Hebels 32 wirkt mit dem Betätigungselement 27 zusammen, wie noch weiter unten näher erläutert wird. Die dem Lagerelement 34 zugeordnete Hebel 31 und der mit dem Betätigungselement 27 zusammenwirkende Hebel 35 sind im Winkel, im Ausführungsbeispiel senkrecht zueinander angeordnet. Es sind Ventilkörper mit unterschiedlich langen Hebeln 35, die mit dem Betätigungselement 27 zusammenwirken vorgesehen, wie insbesondere der Fig. 6 bis 10 zu entnehmen ist.

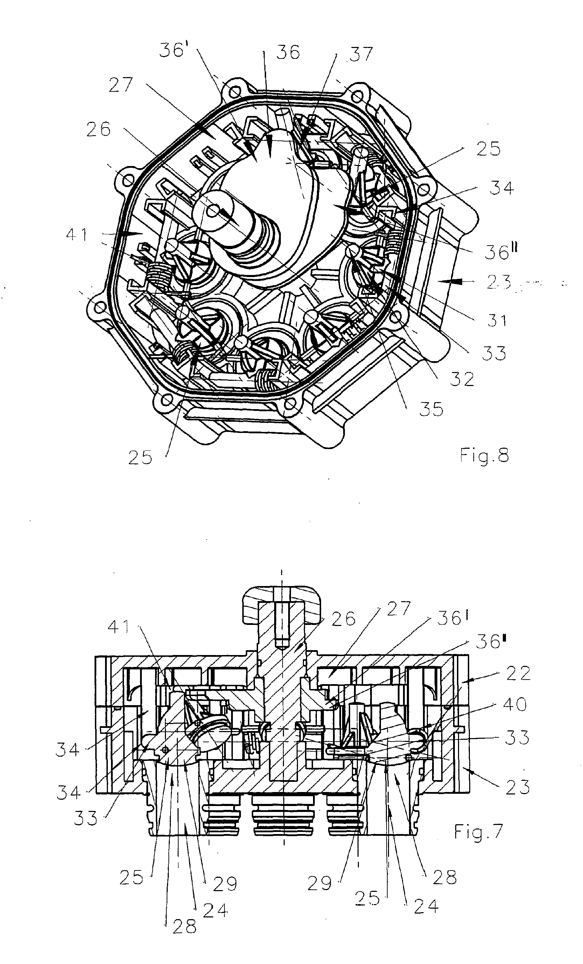

Das zentrale Betätigungselement 27 weist zwei hintereinander und versetzt zueinander angeordnete Betätigungsnocken 36 auf, wie insbesondere den Fig. 8 bis 10 zu entnehmen ist. Somit weist das zentrale Betätigungselement 27 zwei exzentrisch zur Drehachse des Betätigungselementes 27 angeordnete Betätigungsnocken 36 auf. Der jeweilige Betätigungsnocken 36 weist in seinem Schaltbereich 37 zur Betätigung des jeweiligen Ventilkörpers 25 zumindest zwei unterschiedliche Steigungsbereiche 38,39auf, und zwar derart, dass er zum Öffnen der Abgangsleitung eine relativ geringe Steigung 39 und in seinem anschließenden Bereich eine wesentlich größere Steigung aufweist.

Es sind Ventilkörper 25 mit unterschiedlich langen Hebeln 35, die mit dem Betätigungselement 27 zusammenwirken, vorgesehen.

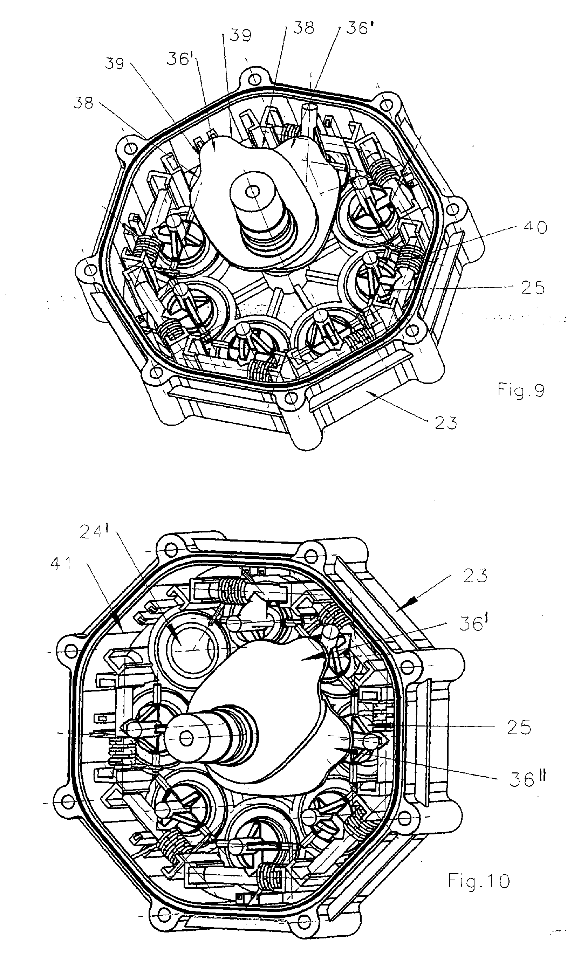

Die Betätigungsnocken 36 sind, wie bereits vor erwähnt, hintereinander und versetzt zueinander angeordnet und zwar derart, dass der den Öffnungen, die durch die Ventilkörper 25 verschließbar bzw. freizugeben sind, an dichtesten gelegene Betätigungsnocken 36' sowohl die Ventilkörper 25 mit den langen 35' wie den kurzen Hebeln 35'' betätigen und verschwenken kann, während der von den Öffnungen, die durch die Ventilkörper 25 verschließbar sind, weiter entfernt liegende Betätigungsnocken 36" nur die Ventilkörper 25 nur mit dem längeren Hebel 35' bedienen kann, wie dies insbesondere die Fig. 7 und 10 zeigen. In der Fig. 7 ist zu erkennen, dass der obere Betätigungsnocken 36 sich in einem Abstand zu dem oberen Enden des kürzeren Hebels 35'' eines Ventilkörpers 25 befindet und diesen somit nicht betätigen kann.

Den Ventilkörpern 25 ist jeweils eine als Schenkelfeder 41 ausgebildete Feder derart zugeordnet, dass die Feder 40 den Ventilkörper 25, bezogen auf die Öffnung der Abgangsleitungen in Schließstellung drückt.

Eine der Öffnungen 24', an der die Zugangsleitung 6 angeschlossen ist, ist kein Ventilkörper 25 zugeordnet, wie insbesondere der Fig. 10 eindeutig zu entnehmen ist. Über diese Öffnung 24' strömt die unter Druck stehende Flüssigkeit aus der Zugangsleitung 6 durch die Öffnung 24' in den Innenraum 41 des Mehrwegeventils 5 ein. Je nach Schaltstellung der Betätigungsnocken 36 des zentralen Betätigungselementes 27 kann die einströmende Flüssigkeit über die von dem Ventilkörper 25, die von ihrem Ventilsitz 42 durch die Betätigungsnocken 36 abgehoben sind, wie in der Fig. 6 auf der rechten Seite oder in den Fig. 8 und 10, die verschiedene Schaltstellungen zeigen, anschaulich dargestellt ist. Somit sind je nach Erfordernis der jeweiligen Einsatzsituationen durch die entsprechende Schaltstellung der Ventilkörper 25 und der entsprechenden Anordnung von Ventilkörpern 25 mit kurzen und langen Hebeln 35 die verschiedensten Kombinationsmöglichkeiten, die bei dem Spritzenbetrieb vor oder nach dem Spritzvorgang erfolgen in einfacher Weise über ein Mehrwegeventil 5 über das zentrale Betätigungselement 27 in der jeweils entsprechenden Einstellung einzustellen. Dies heißt also, dass durch die verschiedenen Schaltkombination und Funktionsmöglichkeiten die Beaufschlagung der verschiedenen Abgangsleitung 24 mit der Zugangsleitung 6 verbunden werden können, um so u.a. folgende Funktionen durchführen zu können: Spitzvorgang durch Ausbringen der Flüssigkeit über die den einzelnen Teilbereiten zugeordneten und an ein Verteilergestänge angeordneten Verteilerdüsen, befüllen des Flüssigkeitstanks, einspülen des Spülmittels über den Einspülbehälter in den Flüssigkeitstank, reinigen von der Feldspritze oder Teilen davon.

In nicht dargestellter Weise kann die Schaltwelle 26 auf dem Handhebel 20 angewandten Seite aus dem Gehäuse 21 herausgeführt sein, so dass die Welle 26 auf beiden Seiten des Gehäuses 21 aus dem Gehäuse 21 herausragt. Auf der einen Seite der Welle 26 ist dann der Handhebel 20 auf der anderen Seite der Welle 26 ist dann ein motorisches Betätigungselement angeordnet.

## Patentansprüche

1. Mehrwegeventil, insbesondere für eine landwirtschaftliche Feldspritze mit einem Gehäuse, an dem eine als Druckleitung ausgebildete Zugangsleitung und mehrere Abgangsleitungen angeschlossen sind, **dadurch gekennzeichnet, dass** den Abgangsleitungen jeweils ein Ventilkörper (25) zum Öffnen und Schließen der Abgangsleitungen zugeordnet ist, dass die Ventilkörper (25) mittels eines zentralen Betätigungselementes (27) in eine Schließ- und Öffnungsstellung versetzbar sind.

2. Mehrwegeventil nach Anspruch 1, **dadurch gekennzeichnet, dass** das zentrale Betätigungselement (27) zumindest einen exzentrisch zur Drehachse des Betätigungselementes (27) angeordneten Betätigungsnocken (36) aufweist.

3. Mehrwegeventil nach Anspruch 2, **dadurch gekennzeichnet, dass** das Betätigungselement (27) zumindest zwei hintereinander und versetzt zueinander angeordnete Betätigungsnocken (36,36',36'') aufweist.

4. Mehrwegeventil nach einem oder mehreren der vorstehenden Ansprüche, **dadurch gekennzeichnet, dass** der Betätigungsnocken (36) in seinem Schaltbereich (37) zur Betätigung des jeweiligen Ventilkörpers zumindest zwei unterschiedliche Steigungsbereiche (38,39) aufweist und zwar zunächst zum Öffnen der Abgangsleitung eine relativ geringe Steigung (38) und in seinem anschließenden Bereich eine wesentlich größere Steigung (39).

5. Mehrwegeventil nach Anspruch 1, **dadurch gekennzeichnet, dass** der Ventilkörper (25) an einem Hebel (32) angeordnet ist, dass an der einen Seite (31) des Hebels (32) ein Lagerelement (33), mit welchem der Ventilkörper (25) am Gehäuse (21) verschwenkbar gelagert ist, angeordnet ist, dass die andere Seite (35) des Hebels (32) mit dem Betätigungselement (27) zusammenwirkt.

6. Mehrwegehahn nach Anspruch 5, **dadurch gekennzeichnet, dass** der dem Lagerelement (33) zugeordnete Hebel (31) und der mit dem Betätigungselement (27) zusammenwirkende Hebel (35) im Winkel zueinander, vorzugsweise zumindest annähernd senkrecht zueinander angeordnet sind.

7. Mehrwegeventil nach einem oder mehreren der vorstehenden Ansprüche, **dadurch gekennzeichnet, dass** Ventilkörper (25) mit unterschiedlich langen Hebeln (35',35''), die mit dem Betätigungselement (27) zusammenwirken, vorgesehen sind.

8. Mehrwegeventil nach Anspruch 3, **dadurch gekennzeichnet, dass** die Betätigungsnocken (36) in unterschiedlichen Stellungen zueinander angeordnet und/oder anordbar sind.

9. Mehrwegeventil nach einem oder mehreren der vorstehenden Ansprüche, **dadurch gekennzeichnet, dass** die Öffnungen der Zuleitung (24) und der Abgangsleitungen (24) in einer Ebene und auf einem zentrisch zu der Drehachse des Betätigungselementes (27) gelegenen Kreises angeordnet sind.

10. Mehrwegeventil nach Anspruch 9, **dadurch gekennzeichnet, dass** die Zuleitung (24) und die Abgangsleitungen (24) mit ihren Öffnungen in einer flachen Ebene in das Gehäuse (21) einmünden.

11. Mehrwegeventil nach einem oder mehreren der vorstehenden Ansprüche, **dadurch gekennzeichnet, dass** den Ventilkörpern (25) jeweils eine Feder (41) derart zugeordnet ist, dass die Feder (41) den Ventilkörper (25), bezogen auf die Öffnung der Abgangsleitung, in Schließstellung drückt.

12. Mehrwegeventil nach einem oder mehreren der vorstehenden Ansprüche, **dadurch gekennzeichnet, dass** das Betätigungselement (27) eine drehbar im Gehäuse gelagerte Betätigungswelle (26) aufweist, dass die Betätigungswelle (26) aus beiden Seiten des Gehäuses herausgeführt ist, dass dem einen Ende der Betätigungswelle ein Handbetätigungselement und dem anderen Ende der Betätigungswelle ein motorisches Betätigungselement zugeordnet ist.

13. Landwirtschaftliches Feldspritze mit Flüssigkeitstank, Pumpe, einstellbarer Dosiereinrichtung mit Dosierarmatur und Verteilergestänge mit vorzugsweise als Düsen ausgebildeten Ausbringelementen mit einem Mehrwegeventil nach einem oder mehreren der vorstehenden Ansprüche.
